# EUROPEAN PATENT APPLICATION

(11) **EP 2 601 828 A1**
(43) Date of publication of application: **12.06.2013**
(21) Application number: 12193641.3
(22) Date of filing: 21.11.2012
(51) Int. Cl.: A01G 13/02, E01C 9/00

(54) **Structure for creating housings for setting trees, and method for setting trees**

(30) Priority: 06.12.2011 IT PN20110081
(71) Applicant: Pontarolo Engineering S.p.a., 33078 San Vito al Tagliamento (IT)
(72) Inventor: Pontarolo, Valeiro, 33078 San Vito Al Tagliamento (PN) (IT); Pontarolo, Luca, 33078 San Vito al Tagliamento (PN) (IT)
(74) Representative: Di Gennaro, Sergio

(57) **Abstract**

A structure for creating housings for setting trees into the ground is proposed, comprising a plurality of modular elements (2), each one comprising an upper face (21) and support legs (22), said elements being associable with one another so as to obtain an upper surface (P, M), which is substantially continuous, and a lower volume (V), tubular extensions (24), which at least partially cover the legs (22), which, according to their length, determine the depth of the housing and hence the dimension of the volume (V). Said tubular extensions are held in position, before the subsequent positioning of said modular elements, by means of a framework, which is provided with supports (32) adapted to be inserted into the upper mouth of the tubular extensions themselves.

## Description

The present invention relates to a structure for creating housings for setting trees into the ground and to a method for setting trees into the ground.

In particular, the present invention relates to a structure for creating housings for setting trees into road surfaces such as, for example, pavements, squares, boulevards, which are generally covered with asphalt or concrete, and which generally do not show any opencast soil, which is necessary for planting a tree.

Trees are normally planted into road surfaces by making a hole or an opening in the road surface itself, so as to remove the road surface material and gain access to the underlying soil, into which the roots of the tree will then be placed.

Everything is then covered again by restoring the road surface, possibly leaving uncovered a circular area around the trunk of the tree, where the soil will remain visible. In drivable places, this area is often very small and insufficient to ensure proper tree vitality. In addition, as the tree grows, the roots will cause cracks in the covered areas and waves on the road surface, which may even hinder the practicability of the areas near the tree.

The object of the present invention is to overcome such drawbacks by providing a structure for creating housings for setting trees into the ground, which can create an underground region that can be filled with soil, where tree roots will be able to grow freely. Notwithstanding this, said region is then covered again to form the road or pavement surface, while at the same time preserving an underground vital space for the nourishment and expansion of the roots of the tree. Furthermore, this substantially prevents the roots from breaking or damaging the road surface.

Patent IT1288881 filed in the name of the same Applicant describes a modular floor support and aeration element to be applied for the purpose of insulating floors from the underlying soil. Said modular element has an upper face and support legs. Such elements can be coupled to one another to create a continuous structure, i.e. a plane onto which a concrete layer is then cast. Underneath the upper face, a free space is maintained between the legs where air is allowed to circulate, thus contributing to preventing moisture from penetrating into the floor that will then be laid onto the concrete layer.

The Applicant has perceived that such modular elements and other elements of the same kind described in patents IT1292348 and IT1379439 can be used for creating a housing under a road surface, into which soil and other materials suitable for planting trees can be placed.

One aspect of the present invention relates to a structure having the features set out in the appended claim 1.

A further aspect of the present invention relates to a method for setting trees into road surfaces in accordance with the features set out in claim 8.

The features and advantages of the structure according to the present invention will become more apparent from the following explanatory and non-limiting description of one embodiment thereof with reference to the annexed drawings, wherein:

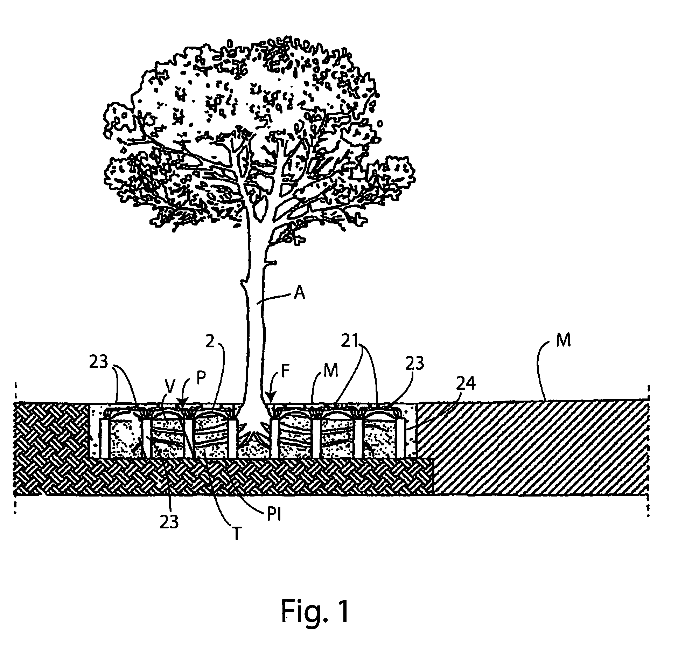

- Figure 1 shows a sectional side view of the structure according to a first embodiment of the present invention;

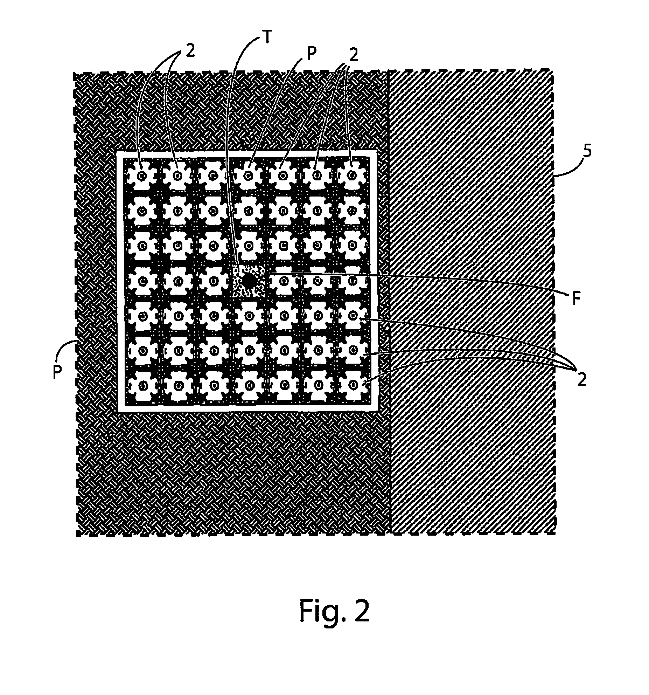

- Figure 2 shows a plan view of the structure of Figure 1, before the support concrete is cast onto it and the road surface is restored;
- Figure 3 shows a framework which is formed prior to laying the modular elements of the structure according to an embodiment of the present invention;
- Figure 4 shows an element of the framework of Figure 3 according to an embodiment of the present invention;
- Figures 5a and 5b show a framework element according to a further embodiment of the present invention;
- Figure 6 shows a framework obtained by using the elements of Figures 5a and 5b;

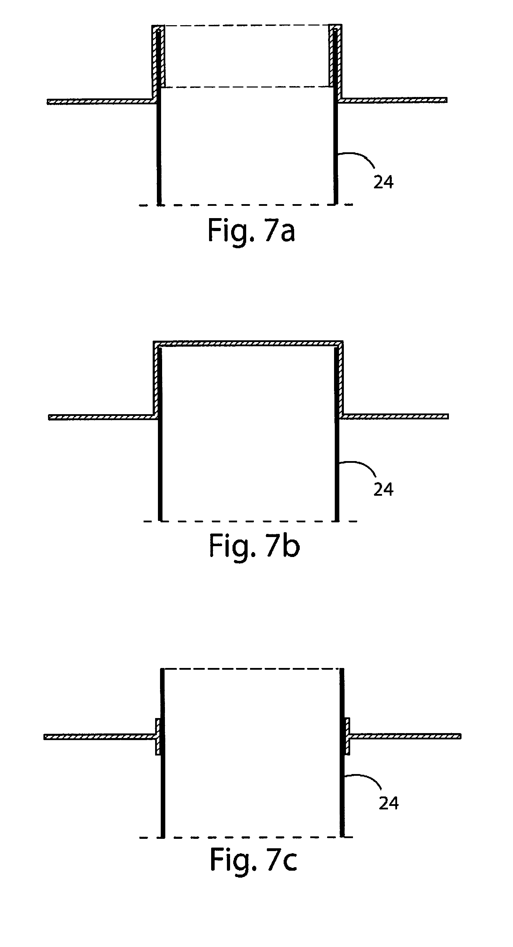

- Figures 7a - 7c show a detail of the coupling between the tubular extensions and the framework elements.

With reference to the above-mentioned drawings, the structure according to the present invention comprises a plurality of modular elements 2, each one comprising an upper face 21 and support legs 22. Said elements are associable with one another to obtain a (flat or arched) surface P, which is substantially continuous, and an empty lower volume V. Said upper face is preferably square or rectangular, but it may have a different shape so long as it is suitable for creating said surface P. Said element may, for example, be made of plastic, expanded plastic, wood, reinforced concrete or iron.

Legs 22 are preferably so shaped as to be coupled to the legs of the adjacent modular element in the structure.

In a central portion of the structure, the absence of at least one element 2 or a part thereof determines the creation of a through opening F, which establishes a communication between volume V and the area above surface P. Through said opening, the trunk of tree A can be inserted. Volume V is filled with loam soil or another compatible material suited for the nourishment and growth of the tree.

On surface P, it is possible to reconstruct road surface M. In addition, according to a feature of the present invention, the structure may comprise a plurality of holes 23, obtained above the modular elements and creating a draining slab, thus allowing water to pass through the reconstructed road surface and reach the underlying loam soil.

The modular elements are provided with tubular extensions 24, which at least partially cover legs 22, which, according to their length, determine the depth of the housing and hence the dimension of volume V. Concrete or another suitable material can be inserted into the extensions, so as to firmly constrain the legs of adjacent modular elements 2 to each other. Also, said tubular extensions filled with material form "small pillars" that determine the load-carrying capacity of the structure, which must be able to withstand the weight of the road surface and of anything that may pass on it.

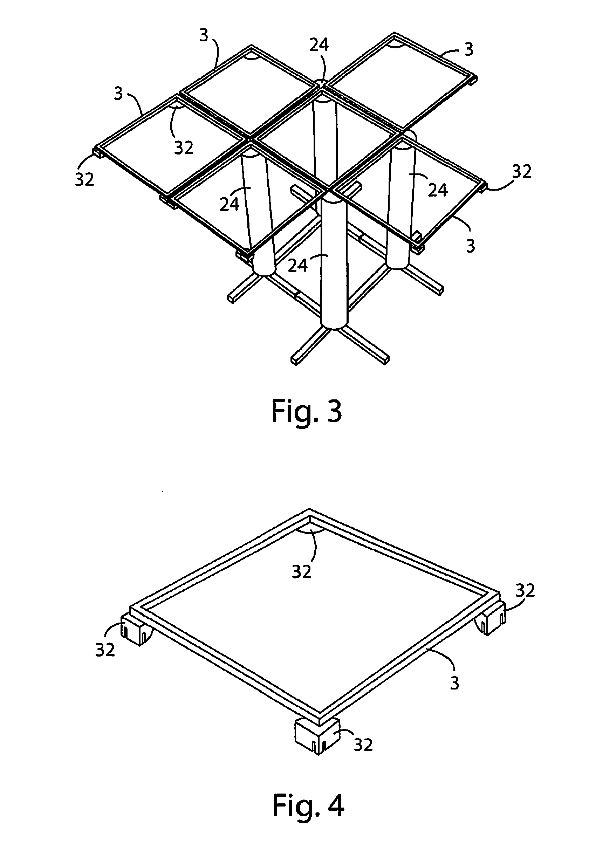

Such tubular extensions are inserted into the excavation before modular elements 2. They are held in the operating position (i.e. substantially vertical) by a framework made up of frame elements which, in the embodiment of the invention shown in Figures 3 and 4, are square or rectangular framework frames 3 arranged adjacent to one another, substantially in a chessboard fashion. The frames rest on the upper ends of the tubular extensions, thereby holding the latter in the predetermined position.

The dimensions of said frames match the size of upper face 21 of modules 2.

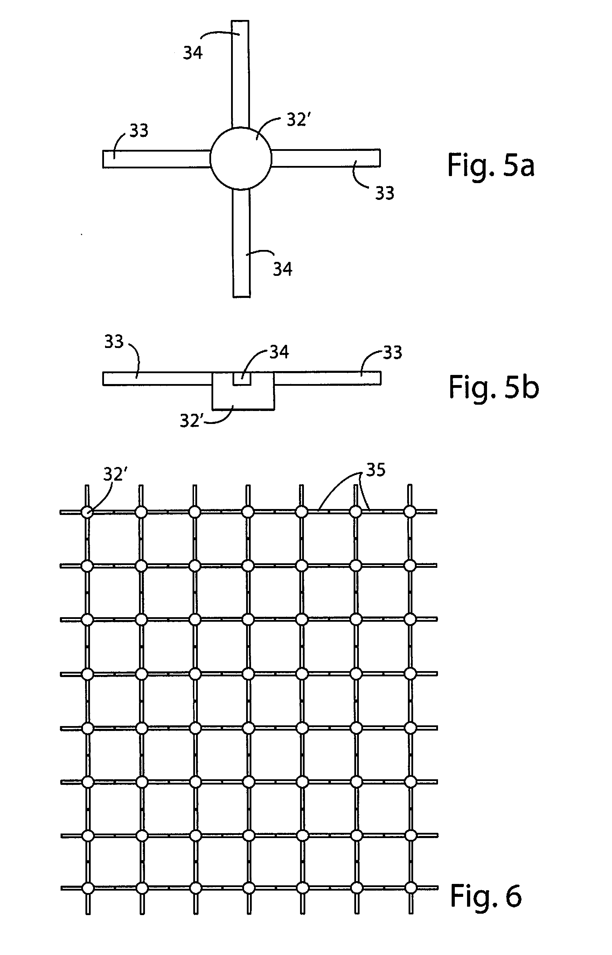

Said framework frames 3 essentially comprise a quadrangular crown 31 having at each angle a support 32 adapted to be inserted into the upper mouth of said tubular extensions. The shape of said support 32 is such as to facilitate its insertion into the tubular element, even when there are four associated supports as shown in Figure 4. In fact, in the embodiment shown in Figures 3 and 4, the supports consist of 90° circular sectors, so as to obtain a cylindrical solid when four frame are joined together in a square arrangement. Said cylindrical solid is adequately sized to be easily inserted into the tubular extension, while also acting as a plug for the upper opening of the extension. In a further embodiment, the tubular extension may have a quadrangular cross-section. According to the embodiment shown in Figures 5 and 6, the framework elements have a substantially cross-shaped structure, wherein supports 32' are associated with said tubular extensions and with respective limbs 33 and 34 of said cross. Said limbs are provided with constraining means 35 for creating a constraint to the limbs of a similar cross, so as to form a framework like the one shown in Figure 6.

In other embodiments, the framework is made up of cross-shaped or quadrangular-frame structures, wherein the supports to be associated with the tubular extensions are hooks. Said hooks may be of the type that engages in a "U" fashion into the upper tubular wall. The upper opening of tubular extensions 24 may be, without distinction, either closed or left open by the frame according to the present invention. Furthermore, each support may have additional grooves, seats and protuberances adapted to facilitate the engagement between the frames and the tubular extensions.

After the extensions and the frameworks have been laid, the excavation is filled with soil and then modules 2 are laid. Once modules 2 have been laid in position, concrete is cast which, when hardened, will support road surface M.

The method for setting a tree into the ground is carried out as follows.

The first step comprises forming a lower setting plane PI, e.g. by making a sufficiently large excavation. Subsequently, the tubular extensions are positioned and the framework is constructed thereon by positioning crowns 3. Once the extensions have been secured, the excavation can be filled with loam soil T or with the desired material.

After the excavation has been filled, the framework can be removed and replaced with modular elements 2.

On said modular elements, concrete or any other material suitable for supporting the road surface is then cast.

Advantageously, the step of laying the modular elements includes creating the opening for inserting the trunk of the tree.

This can be achieved through the absence of at least one element in the desired position, in the area corresponding to the aforementioned root housing, or by subsequently removing, e.g. by breaking or coring upper plane 21, at least one of the already positioned elements and removing the concrete.

The tree is then positioned by inserting it through said opening.

By so doing, it is possible to restore the road surface very quickly, in that both the filling of volume V and the positioning of the tree can be done at a later time, even after having formed the housing. While the road surface can be restored immediately after having made the excavation, laid the modules and cast the concrete.

As an alternative, the tree may be inserted into the excavation prior to laying the modules, after having removed the framework and filled the setting plane with soil.

According to a further alternative, the excavation is made around an existing tree, by excavating between the roots and cutting them as necessary, in order to be able to position tubular elements 24 and lay the modular elements.

Volume V has suitable dimensions for ensuring a proper nourishment of the tree and, depending on the type of plant to be set into the ground, one can choose the number and composition of the modular elements to be positioned (e.g. to form a square or a rectangle). In addition, one can change the length of tubular extensions 24 according to the required height to be filled with loam soil or another suitable material.

The setting plane may be laterally delimited, in order to prevent the concrete from entering empty volume V that must be filled with loam soil, by using known closing elements (not shown), such as wooden or plastic panels, etc. One suitable closing element is described in patent US 6,941,705.

## Claims

1. Structure for creating housings for setting trees into the ground, comprising
a plurality of modular elements (2), each one comprising an upper face (21) and support legs (22), said elements being associable with one another so as to obtain an upper surface (P, M), which is substantially continuous, and a lower volume (V), which is substantially empty,
tubular extensions (24), which at least partially cover the legs (22), which, according to their length, determine the depth of the housing and hence the dimension of the volume (V),
**characterized in that**
• said tubular extensions are held in position, before the subsequent positioning of said modular elements, by means of a framework, which is provided with supports (32) adapted to be inserted into the upper mouth of the tubular extensions themselves,
• the roadway is reconstructed on said surface (P), except for one or more zones, where a through opening (F) is obtained, which establishes a communication between the volume (V) and the area above the surface (P) itself, and through which the lower portion of the trunk of the tree (A) is inserted,
• the volume (V) is filled with loam soil or with an appropriate material for the nourishment of said tree.

2. Structure according to claim 1, wherein the legs (22) are preferably so shaped as to be coupled with the legs of the adjacent modular element.

3. Structure according to claim 1, comprising a plurality of holes (23), obtained above the modular elements and creating a draining slab, thus allowing water to pass through the reconstructed road surface and reach the underlying loam soil.

4. Structure according to claim 1, wherein the framework comprises frames (3) having a substantially quadrangular shape and dimensions corresponding to the size of the upper face (21) of the modules (2).

5. Structure according to claim 4, wherein said framework frames (3) substantially comprise a quadrangular crown (31) having at each angle one of said supports (32) adapted to be inserted into the upper mouth of said tubular extensions.

6. Structure according to claim 5, wherein the supports consist of 90° circular sectors, so as to obtain a cylindrical solid when four frames are joined together in a square arrangement.

7. Structure according to claim 1, wherein the framework comprises a substantially cross-shaped structure, at the center of which there are supports (32') that are associated with said tubular extensions, respective limbs (33 and 34) of said cross being provided with constraining means (35) for creating a constraint to the limbs of a similar cross.

8. Method for setting trees, shrubs, plants or the like into a road surface, **characterized in that** it comprises the following steps:
• forming a lower setting plane (PI), which is sufficiently wide,
• positioning a plurality of tubular extensions on said lower setting plane,
• forming a framework provided with supports (32), adapted to be inserted into the upper mouth of the tubular extensions themselves, so as to hold said extensions in the predetermined position, a filling volume (V) being created under said framework,
• filling said filling volume (V) with loam soil or with the desired material, except for at least one housing for the roots of at least one tree,
• removing the framework and positioning a plurality of modular elements (2), each one comprising an upper face (21) and support legs (22), adjacent to one another, by inserting each leg into said extensions (24), so as to obtain an upper surface (P), which is substantially continuous,
• casting concrete or any other material adapted to restore the road surface,
• creating an opening (F) in the upper surface (P), in a position corresponding to said housing, for inserting the lower part of the trunk of the tree (A),
• positioning the tree by inserting it into said opening (F).

9. Method according to claim 8, wherein said step of creating the opening (F) is obtained through the absence of at least one modular element in the desired position.

10. Method according to claim 8, wherein said step of creating the opening (F) is obtained by removing, through breaking or coring of the upper face (21), of at least one of the positioned elements and by removing the concrete covering it.

11. Structure according to the preceding claims, wherein the upper opening of the tubular extensions (24) may be either closed by the framework or left open.
